# FASCICULE DE BREVET EUROPEEN

(11) **EP 1 516 690 B1**
(45) Date de publication et mention de la délivrance du brevet: **27.03.2019**
(21) Numéro de dépôt: 04104479.3
(22) Date de dépôt: 16.09.2004
(51) Int. Cl.: B23K 20/12

(54) **Procédé de fabrication ou de réparation d'un disque aubage monobloc**
Verfahren zur Herstellung oder Reparatur einer beschaufelten Rotorscheibe
Method of manufacturing or repairing a bladed rotor disc

(30) Priorité: 19.09.2003 FR 0350578
(43) Date de publication de la demande: 23.03.2005
(73) Titulaire: Safran Aircraft Engines, 75015 Paris (FR)
(72) Inventeur: ADDE, Danielle, 77240, CESSON (FR); BOURGEOIS, Marie-France, 13840, ROGNES (FR); LESTOILLE, Patrick, Didier, Michel, 77300, FONTAINEBLEAU (FR); FERTE, Jean, Pierre, 91100, CORBEIL-ESSONNES (FR); SONIAK, Francis, Gilles, Basile, 91440, BURES SUR YVETTE (FR); MIRAUCOURT, Gérard, 77170, BRIE COMTE ROBERT (FR)
(74) Mandataire: Ahner, Philippe

(56) Documents cités:
- EP-A- 0 458 630
- EP-A- 0 850 718
- EP-A- 0 887 143

## Description

### DOMAINE TECHNIQUE

La présente invention se rapporte de façon générale à un procédé de fabrication ou de réparation d'un disque aubagé monobloc comprenant la formation d'une surface de joint de soudure sur un plot dépassant d'un disque, cette surface de joint de soudure étant destinée à permettre un assemblage ultérieur par soudage par friction linéaire d'une pale sur ce même plot dépassant.

Par ailleurs, l'invention se rapporte également à un disque pour disque aubagé monobloc comportant au moins un plot dépassant sur lequel est prévue une telle surface de joint de soudure.

L'invention s'applique tout particulièrement mais non exclusivement au domaine des rotors de turbomachines.

### ETAT DE LA TECHNIQUE ANTERIEURE

Dans certains rotors de turbomachines, il est utilisé des disques aubagés monoblocs, c'est-à-dire des portions de rotor auxquelles des étages de pales tournantes sont unis rigidement par exemple par soudage par friction linéaire, contrairement à la conception classique où des pieds d'aubes à section en forme de bulbe, de queue d'aronde ou d'une autre forme du même genre sont glissés en des rainures à section complémentaire d'un disque. De façon connue et avantageuse, les disques aubagés monoblocs sont dans l'ensemble plus légers, ce qui explique qu'on puisse les préférer.

Pour fabriquer un disque aubagé monobloc, il est tout d'abord procédé à la fabrication de son disque proprement dit. Ceci est notamment réalisé en prévoyant une pluralité de plots dépassants faisant saillie d'une veine du disque, correspondant à une surface périphérique de ce dernier.

Lors de la fabrication de ce disque, il est mis en oeuvre une étape de formation d'une surface de joint de soudure sur chaque plot dépassant, cette surface s'étendant d'une extrémité amont à une extrémité aval le long d'une corde de plot dépassant, et étant destinée à permettre une étape ultérieure d'assemblage par soudage par friction linéaire d'une pale sur ce même plot dépassant. En outre, il est précisé que cette pale dispose d'une surface complémentaire de joint de soudure, destinée à épouser la surface de joint de soudure du plot dépassant, lors du déroulement de l'étape d'assemblage par soudage par friction linéaire.

Pour réaliser cette étape de formation de la surface de joint de soudure sur le plot dépassant, plusieurs solutions ont été proposées dans l'art antérieur.

Il a en effet tout d'abord été proposé de prévoir une surface de joint de soudure plane, par exemple parallèle à une direction axiale du disque ainsi qu'à une direction tangentielle de ce disque.

A cet égard, il est noté que même si le fait de prévoir une surface plane et unique rend la mise en oeuvre de l'étape de formation de la surface particulièrement facile, cette solution reste néanmoins relativement contraignante, pour une raison essentielle qui va être expliquée ci-après.

Effectivement, les disques présentent habituellement une veine à géométrie relativement complexe, qui prend la forme d'une ligne courbe en section axiale. A titre d'exemple illustratif, les veines de disques rencontrées dans l'art antérieur prennent souvent la forme d'une surface concave.

Or de façon typique et connue, lorsque la fabrication du disque aubagé monobloc est achevée, la pale se trouve raccordée à la veine du disque par l'intermédiaire d'un rayon de raccordement. Le rayon de raccordement correspond donc à un plot de matière agencé entre la pale et la veine, et s'étend de manière sensiblement constante tout le long de celle-ci. Il est noté que ce rayon de raccordement est au moins partiellement formé par le plot initialement prévu sur le disque.

Par conséquent, en raison de la géométrie habituellement complexe de la veine, il est évident que le fait de prévoir une surface de joint de soudure unique et plane implique quasiment nécessairement de concevoir un plot dépassant destiné à constituer non seulement le rayon de raccordement, mais également une partie de la pale. En d'autres termes, en prévoyant une surface de joint de soudure plane, il est impossible de suivre correctement le profil de la veine à géométrie complexe, de sorte qu'au moins une partie de la surface de joint de soudure doit alors obligatoirement s'effectuer en dehors du futur rayon de raccordement ou dans une portion de faible épaisseur de celui-ci. Cela rend bien entendu la mise en oeuvre de l'étape d'assemblage par soudage par friction linéaire de la pale relativement délicate, en raison de la faible surface de contact entre les deux éléments à souder. D'autre part, dans un tel cas, le joint de soudure obtenu dispose alors nécessairement d'une portion de faible épaisseur diminuant significativement la rigidité du maintien de la pale sur le disque.

Dans le document EP 0 887 143 A, il a été proposé de réaliser une surface de joint de soudure parallèle à la veine du disque de géométrie complexe, et droite dans la direction tangentielle du disque afin de permettre l'assemblage par soudage par friction linéaire de la pale sur le plot dépassant.

Cependant, la forme complexe en trois dimensions de cette surface de joint de soudure est extrêmement difficile à réaliser par usinage, de sorte que cette solution n'est pas non plus totalement satisfaisante.

De plus, il est indiqué que les deux solutions de l'art antérieur présentées ci-dessus s'appliquent non seulement pour effectuer la fabrication d'un disque aubagé monobloc, mais également lorsqu'il s'agit de réaliser une réparation consistant à remplacer une ou plusieurs pales de ce disque aubagé.

Naturellement, lors d'un tel procédé de réparation, les inconvénients relatifs aux diverses solutions indiquées ci-dessus se retrouvent de la même façon que lors de la fabrication de ce même disque aubagé monobloc.

### EXPOSÉ DE L'INVENTION

L'invention a donc pour but de proposer un procédé de fabrication ou de réparation d'un disque aubagé monobloc comprenant la formation d'une surface de joint de soudure sur un plot dépassant d'un disque, le procédé remédiant au moins partiellement aux inconvénients mentionnés ci-dessus relatifs aux réalisations de l'art antérieur.

D'autre part, l'invention a également pour but de proposer un disque pour disque aubagé monobloc comportant au moins un plot dépassant, sur lequel est prévue une surface de joint de soudure formée selon le procédé répondant au but mentionné ci-dessus.

Pour ce faire, l'invention a tout d'abord pour objet un procédé de fabrication ou de réparation d'un disque aubagé monobloc comprenant une étape de formation, sur un plot dépassant appartenant à un disque et s'étendant d'une extrémité amont à une extrémité aval le long d'une corde de plot dépassant, d'une surface de joint de soudure destinée à permettre une étape ultérieure d'assemblage par soudage par friction linéaire d'une pale sur le plot dépassant du disque. Selon l'invention, l'étape de formation de la surface de joint de soudure est réalisée de sorte que celle-ci comprenne au moins deux portions planes jointives, agencées successivement le long de la corde de plot dépassant.

Avantageusement, de par la forme spécifique de la surface de joint de soudure du plot dépassant, sa formation est beaucoup plus rapide et facile à réaliser que celle décrite dans le document EP 0 887 143 A, ce qui permet par conséquent de diminuer les coûts de mise en oeuvre d'un tel procédé de fabrication ou de réparation de disque aubagé monobloc.

De plus, en raison du fait qu'il est prévu au moins deux portions planes jointives, donc inclinées les unes par rapport aux autres, il est alors aisé de former la surface de joint de soudure au plus près de la veine du disque, contrairement à la solution de l'art antérieur relative à la surface de joint de soudure unique et plane. A ce titre, il est précisé qu'en suivant au plus près la veine du disque, la surface de joint de soudure peut facilement être pratiquée de manière à se trouver intégralement au niveau d'un futur rayon de raccordement entre la veine et la pale concernée. En d'autres termes, le joint de soudure obtenu suite à l'étape d'assemblage de la pale par soudage par friction linéaire peut aisément se trouver entièrement au niveau du rayon de raccordement situé entre les deux éléments.

En conséquence, la surface de joint de soudure pouvant être avantageusement dépourvue de partie de faible épaisseur, il est bien entendu que la mise en oeuvre de l'étape d'assemblage de la pale par soudage par friction linéaire est facilitée par rapport à celle rencontrée dans la première solution décrite de l'art antérieur, et que le joint de soudure obtenu procure naturellement un meilleur maintien de la pale par rapport au disque.

En outre, la présence de portions planes jointives, reliées entre-elles par des intersections prenant la forme de lignes droites parallèles, permet de réaliser un positionnement précis de la pale par rapport au plot dépassant, ainsi que de diminuer considérablement les risques de déplacements non-désirés de cette pale durant l'étape d'assemblage par soudage par friction linéaire. Cela s'explique par le fait que la pale est maintenue fermement entre les multiples portions planes inclinées de la surface de joint de soudure, et est par conséquent auto-centrée sur cette dernière.

Préférentiellement, l'étape de formation de la surface de joint de soudure est réalisée de sorte que celle-ci soit exclusivement constituée de deux portions planes jointives, ou encore que celle-ci soit exclusivement constituée de trois portions planes jointives. Bien entendu, le nombre de portions planes jointives constituant la surface de joint de soudure pourrait être supérieur, sans sortir du cadre de l'invention. Cependant, il est noté que le nombre de deux ou trois portions est préféré dans la mesure où il implique que la surface de joint de soudure résultante est relativement simple à effectuer, tout en étant capable de suivre correctement la veine du disque sans sortir du futur rayon de raccordement, et ce pratiquement quelle que soit la complexité de la forme de cette veine.

De préférence, l'étape de formation de la surface de joint de soudure est réalisée de sorte que chaque intersection entre deux portions planes jointives soit parallèle à une direction d'oscillation adoptée pour la mise en oeuvre de l'étape d'assemblage de la pale par soudage par friction linéaire.

A ce titre, la direction d'oscillation adoptée pour la mise en oeuvre de l'étape d'assemblage de la pale par soudage par friction linéaire est choisie parmi le groupe constitué d'une direction tangentielle du disque, et de toutes directions sensiblement perpendiculaires à la corde de plot dépassant, ces directions indicatives étant bien entendu préférées mais en aucun cas limitatives.

Enfin, de façon relativement classique, le procédé de fabrication ou de réparation selon l'invention comprend de préférence une étape de formation, sur une pale, d'une surface complémentaire de joint de soudure, susceptible d'épouser la surface de joint de soudure du plot dépassant du disque.

D'autre part, l'invention a pour objet un disque pour disque aubagé monobloc comportant au moins un plot dépassant s'étendant d'une extrémité amont à une extrémité aval le long d'une corde de plot dépassant, et sur lequel est prévue une surface de joint de soudure destinée à permettre un assemblage par soudage par friction linéaire d'une pale sur le plot dépassant du disque. Selon l'invention, pour au moins un plot dépassant, la surface de joint de soudure comprend au moins deux portions planes jointives, agencées successivement le long de la corde de plot dépassant.

De préférence, pour au moins un plot dépassant, la surface de joint de soudure est exclusivement constituée de deux portions planes jointives, ou encore exclusivement constituée de trois portions planes jointives.

De plus, de manière analogue à celle présentée ci-dessus, on peut prévoir que pour au moins un plot dépassant, chaque intersection entre deux portions planes jointives de la surface de joint de soudure est parallèle à une direction choisie parmi le groupe constitué d'une direction tangentielle du disque, et de toutes directions sensiblement perpendiculaires à la corde de plot dépassant.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue partielle en perspective d'un disque et d'une pluralité de pales destinés à constituer un disque aubagé monobloc, après l'étape de formation de la surface de joint de soudure du procédé de fabrication ou de réparation mis en oeuvre selon un premier mode de réalisation préféré de la présente invention ;
- la figure 2 représente une vue partielle en coupe axiale du disque aubagé monobloc obtenu suite à la réalisation du procédé de fabrication ou de réparation selon le premier mode de réalisation préféré de la présente invention ;
- la figure 3 représente une vue de dessus du disque représenté sur la figure 1 ;
- la figure 4 représente une vue similaire à celle de la figure 3, lorsque le procédé de fabrication ou de réparation est mis en oeuvre selon une alternative du premier mode de réalisation préféré de la présente invention ;
- la figure 5 représente une vue partielle et à plus grande échelle de la vue représentée sur la figure 1 ; et
- la figure 6 représente une vue similaire à celle de la figure 5, lorsque le procédé de fabrication ou de réparation est mis en oeuvre selon un second mode de réalisation préféré de la présente invention.

### EXPOSÉ DÉTAILLÉ DE MODES DE RÉALISATION PRÉFÉRÉS

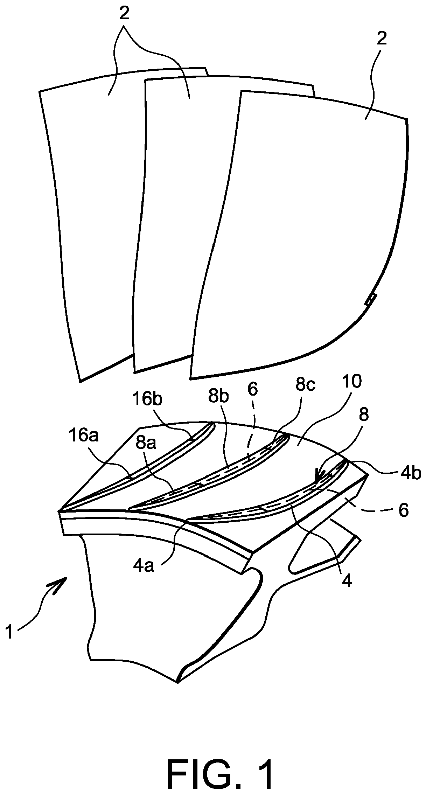

En référence à la figure 1, on peut voir un disque 1 ainsi qu'une pluralité de pales 2 destinés à constituer un disque aubagé monobloc, de préférence pour équiper un rotor de turbomachine. Sur cette figure, le disque 1 est représenté dans un état dans lequel il se trouve suite à la réalisation d'une étape de formation d'une surface de joint de soudure du procédé de fabrication ou de réparation mis en oeuvre selon un premier mode de réalisation préféré de la présente invention.

Comme on peut le voir sur cette figure 1, le disque 1, également objet de la présente invention, comprend une pluralité de plots dépassants 4 s'étendant chacun d'une extrémité amont 4a à une extrémité aval 4b, le long d'une corde de plot dépassant 6. Il est noté que les extrémités amont et aval 4a et 4b d'un plot dépassant 4 correspondent respectivement au bord d'attaque et au bord de fuite de ce même plot dépassant 4.

De façon connue, chaque plot dépassant 4 est destiné à constituer un support de fixation pour une pale 2 associée, l'étape d'assemblage de celle-ci sur le plot dépassant 4 étant réalisée par soudage par friction linéaire.

Pour ce faire, sur chaque plot dépassant 4, il est effectivement procédé à la formation d'une surface de joint de soudure 8, sur laquelle la pale 2 sera soudée par friction linéaire.

Dans ce premier mode de réalisation préféré de la présente invention, pour chaque plot 4, la surface de joint de soudure 8 est constituée de trois portions planes jointives 8a,8b,8c, qui s'étendent successivement depuis l'extrémité amont 4a jusqu'à l'extrémité aval 4b, le long de la corde de plot dépassant 6.

De cette manière, comme on peut le voir sur la figure 1, la surface de joint de soudure 8 peut suivre au plus près la veine 10 du disque 1, qui présente ici une forme sensiblement concave, et qui est plus généralement appelée « veine creuse ».

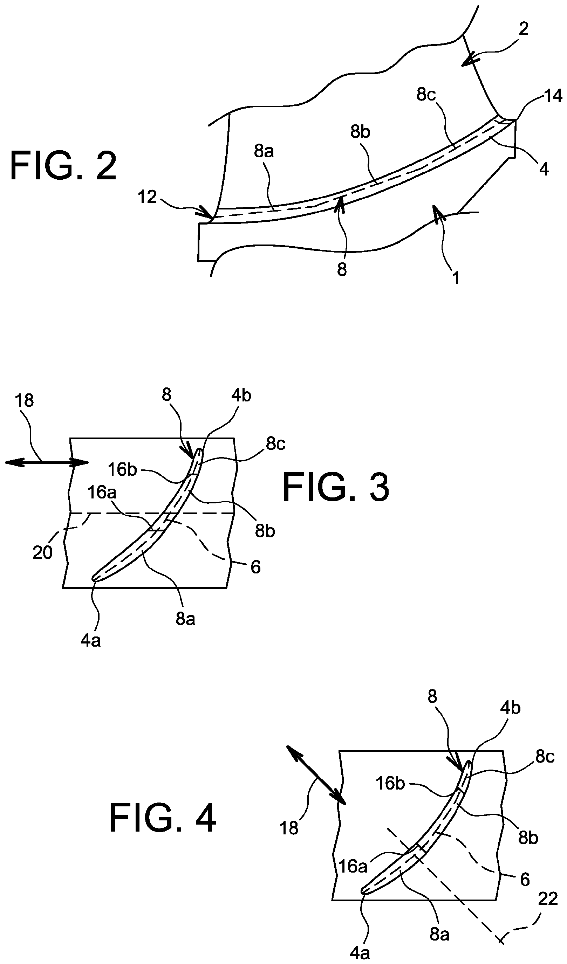

En référence à la figure 2, on peut apercevoir le disque aubagé monobloc obtenu suite à la réalisation du procédé de fabrication ou de réparation selon le premier mode de réalisation préféré de la présente invention.

Comme cela est clairement visible sur cette figure et comme ceci a été présenté ci-dessus dans l'art antérieur, la pale 2 est rattachée au disque 1 par l'intermédiaire d'un rayon de raccordement 12 s'étendant également tout le long de la corde de plot dépassant 6.

Il est noté que la surface de joint de soudure 8 initialement pratiquée sur le plot 4 est représentée en pointillés sur la figure 2 à titre indicatif, mais que ces pointillés illustrent également l'emplacement d'un joint de soudure obtenu suite à la réalisation de l'étape d'assemblage de la pale 2 sur le plot dépassant 4 par soudage par friction linéaire.

Du fait que cette surface de joint de soudure 8 ait pu être réalisée au plus près de la veine 10 implique que le joint de soudure obtenu se situe, de façon très avantageuse, intégralement dans le rayon de raccordement 12. En d'autres termes, lorsque le disque aubagé monobloc se trouve dans son état final tel que représenté, le plot dépassant 4 initialement prévu sur le disque 1 constitue uniquement une portion inférieure radiale du rayon de raccordement 12, tandis qu'une portion supérieure radiale 14 est constituée par de la matière provenant de la pale 2, et séparée du plot dépassant 4 par le cordon de soudure obtenu.

Naturellement, dans le cas où la veine 10 disposerait d'une forme encore plus complexe que celle représentée, le nombre de portions planes jointives 8a,8b,8c pourrait être augmenté pour que la surface de joint de soudure 8 s'adapte correctement à la veine 10, et pour qu'elle se situe encore intégralement au niveau d'un futur rayon de raccordement entre la pale 2 et le disque 1.

En référence à la figure 3, on voit que les trois portions planes jointives 8a,8b,8c se raccordent entre-elles par des intersections 16a et 16b prenant la forme de lignes droites parallèles entre-elles, et également parallèles à une direction d'oscillation adoptée pour la mise en oeuvre de l'étape d'assemblage de la pale 2 par soudage par friction linéaire, cette direction d'oscillation étant représentée schématiquement par la flèche 18.

Dans cette première alternative du premier mode de réalisation préféré de l'invention, la surface de joint de soudure 8 a été formée de sorte que ces intersections 16a et 16b soient parallèles à une direction tangentielle du disque 1, représentée schématiquement par la ligne en pointillés 20.

Par conséquent, en raison du maintien de la pale 2 entre les portions planes 8a,8b,8c durant l'étape de soudage par friction linéaire de cette pale, il est bien entendu que les risques de mouvement radiaux de la pale 2, durant cette étape, sont avantageusement totalement écartés.

Comme le montre la figure 4 représentant une seconde alternative du premier mode de réalisation préféré de l'invention, les intersections 16a et 16b peuvent être orientées dans une autre direction, par exemple dans toutes directions sensiblement perpendiculaires localement à la corde 6 du plot dépassant 4.

C'est en effet l'exemple montré sur cette figure 4, où les intersections 16a et 16b sont parallèles à une direction 22 perpendiculaire localement à une partie de la corde de plot dépassant 6 se trouvant à proximité de l'extrémité amont 4a du plot dépassant 4. De plus, ces intersections 16a et 16b sont également naturellement parallèles à la direction d'oscillation 18 adoptée pour la mise en oeuvre de l'étape d'assemblage de la pale 2 par soudage par friction linéaire, qui diffère donc dans cette seconde alternative d'une direction parallèle à la direction tangentielle du disque 1.

A titre d'exemple indicatif, les portions planes 8a,8b,8c jointives par des intersections 16a et 16b et agencées successivement le long de la corde de plot dépassant 6 peuvent définir, deux à deux, un angle d'environ 15°.

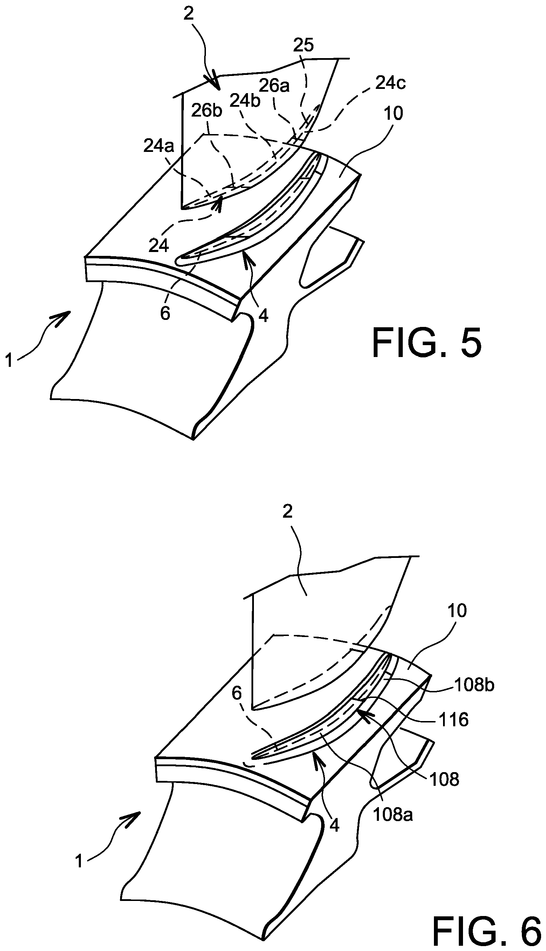

Dans le procédé de fabrication ou de réparation selon le premier mode de réalisation préféré de la présente invention, il est prévu une étape de formation, sur chaque pale 2 destinée à être solidarisée au disque 1, d'une surface complémentaire de joint de soudure 24 représentée sur la figure 5.

Bien entendu et comme sa définition laisse à penser, cette surface 24 est complémentaire de la surface de joint de soudure 8 pratiquée sur le plot dépassant 4 associé, dans le but d'obtenir un contact parfait entre la pale 2 et ce même plot 4 lors de l'étape d'assemblage par soudage par friction linaire.

De cette façon, la surface 24 est constituée, successivement le long d'une corde de pale 25, de trois portions planes jointives 24a,24b,24c, respectivement identiques aux portions planes jointives 8a,8b,8c du plot dépassant 4 auquel la pale 2 est associée.

Il est noté que sur cette figure 5, la pale 2 n'est représentée qu'à titre illustratif, mais qu'elle dispose en fait préférentiellement d'une portion inférieure de volume bien supérieur au reste de la pale sur laquelle est effectivement pratiquée la surface complémentaire 24, ceci dans le but d'autoriser un bon déroulement de l'étape d'assemblage par friction linéaire de la pale 2.

Enfin, en référence à la figure 6, on peut apercevoir un disque 1 et une pale 2 destinée à être assemblée sur ce dernier afin de réaliser un disque aubagé monobloc, le disque 1 étant représenté dans un état dans lequel il se trouve suite à la réalisation d'une étape de formation d'une surface de joint de soudure du procédé de fabrication ou de réparation mis en oeuvre selon un second mode de réalisation préféré de la présente invention.

La principale différence par rapport au premier mode de réalisation préféré réside dans le fait que la surface de joint de soudure 108 est formée de manière à ne disposer que de deux portions planes jointives 108a et 108b, toujours agencées successivement la long de la corde de plot dépassant 6.

Naturellement, cette réalisation est possible lorsque la veine 10 du disque 1 présente une forme sans grande complexité, avec toujours comme objectif principal que cette surface 108 soit pratiquée de manière à se trouver intégralement au niveau d'un futur rayon de raccordement entre la veine 10 et la pale 2 concernée.

Ici encore, l'unique intersection 116 située entre les portions planes 108a et 108b est parallèle à la direction d'oscillation (non représentée sur cette figure) adoptée pour la mise en oeuvre de l'étape d'assemblage de la pale 2 par soudage par friction linéaire.

Enfin, il est indiqué que les diverses modes de réalisation préférés décrits ci-dessus s'appliquent indifféremment pour la fabrication et pour la réparation d'un disque aubagé monobloc.

Bien entendu, diverses modifications peuvent être apportées par l'homme du métier aux procédés et aux disques 1 qui viennent d'être décrits, uniquement à titre d'exemples non limitatifs.

## Revendications

1. Procédé de fabrication ou de réparation d'un disque aubagé monobloc comprenant une étape de formation, sur un plot dépassant (4) appartenant à un disque (1) et s'étendant d'une extrémité amont (4a) à une extrémité aval (4b) le long d'une corde de plot dépassant (6), d'une surface de joint de soudure (8) destinée à permettre une étape ultérieure d'assemblage par soudage par friction linéaire d'une pale (2) sur ledit plot dépassant (4) du disque (1), **caractérisé en ce que** l'étape de formation de la surface de joint de soudure (8) est réalisée de sorte que ladite surface comprenne au moins deux portions planes jointives (8a,8b,8c,108a,108b), agencées successivement le long de la corde de plot dépassant (6).

2. Procédé de fabrication ou de réparation selon la revendication 1, **caractérisé en ce que** l'étape de formation de la surface de joint de soudure (8) est réalisée de sorte que celle-ci soit exclusivement constituée de deux portions planes jointives (108a,108b).

3. Procédé de fabrication ou de réparation selon la revendication 1, **caractérisé en ce que** l'étape de formation de la surface de joint de soudure (8) est réalisée de sorte que celle-ci soit exclusivement constituée de trois portions planes jointives (8a,8b,8c).

4. Procédé de fabrication ou de réparation selon l'une quelconque des revendications précédentes, **caractérisé en ce que** l'étape de formation de la surface de joint de soudure (8) est réalisée de sorte que chaque intersection (16a,16b,116a) entre deux portions planes jointives (8a,8b,8c,108a,108b) soit parallèle à une direction d'oscillation (18) adoptée pour la mise en oeuvre de l'étape d'assemblage de la pale (2) par soudage par friction linéaire.

5. Procédé de fabrication ou de réparation selon la revendication 4, **caractérisé en ce que** la direction d'oscillation (18) adoptée pour la mise en oeuvre de l'étape d'assemblage de la pale (2) par soudage par friction linéaire est choisie parmi le groupe constitué d'une direction tangentielle (20) du disque (1), et de toutes directions (22) sensiblement perpendiculaires à la corde de plot dépassant (6).

6. Procédé de fabrication ou de réparation selon l'une quelconque des revendications précédentes, **caractérisé en ce qu'**il comprend en outre une étape de formation, sur une pale (2), d'une surface complémentaire de joint de soudure (24), susceptible d'épouser la surface de joint de soudure (8) dudit plot dépassant (4) du disque (1).

7. Disque (1) pour disque aubagé monobloc comportant au moins un plot dépassant (4) s'étendant d'une extrémité amont (4a) à une extrémité aval (4b) le long d'une corde de plot dépassant (6), et sur lequel est prévue une surface de joint de soudure (8) destinée à permettre un assemblage par soudage par friction linéaire d'une pale (2) sur ledit plot dépassant (4) du disque (1), **caractérisé en ce que** pour au moins un plot dépassant (4), la surface de joint de soudure (8) comprend au moins deux portions planes jointives (8a,8b,8c,108a,108b), agencées successivement le long de la corde de plot dépassant (6).

8. Disque (1) pour disque aubagé monobloc selon la revendication 7, **caractérisé en ce que** pour au moins un plot dépassant (4), la surface de joint de soudure (8) est exclusivement constituée de deux portions planes jointives (108a,108b).

9. Disque (1) pour disque aubagé monobloc selon la revendication 7, **caractérisé en ce que** pour au moins un plot dépassant (4), la surface de joint de soudure (8) est exclusivement constituée de trois portions planes jointives (8a,8b,8c).

10. Disque (1) pour disque aubagé monobloc selon l'une quelconque des revendications 7 à 9, **caractérisé en ce que** pour au moins un plot dépassant (4), chaque intersection (16a,16b,116) entre deux portions planes jointives (8a,8b,8c,108a,108b) de la surface de joint de soudure (8) est parallèle à une direction choisie parmi le groupe constitué d'une direction tangentielle (20) du disque (1), et de toutes directions (22) sensiblement perpendiculaires à la corde de plot dépassant (6).

## Patentansprüche

1. Verfahren zur Herstellung oder zur Reparatur einer einstückigen beschaufelten Scheibe, das einen Arbeitsschritt enthält, bei dem auf einer hervorstehenden Kontaktrippe (4), die Teil einer Scheibe (1) ist und sich von einem stromaufwärtigen Ende (4a) bis zu einem stromabwärtigen Ende (4b) entlang einer Kontaktrippen-Sehne (6) erstreckt, eine Schweißverbindungs-Oberfläche (8) gebildet wird, die dazu vorgesehen ist, einen weiteren Arbeitsschritt des Einbaus durch lineares Reibschweißen eines Schaufelblatts (2) auf dieser Kontaktrippe (4) der Scheibe (1) zu ermöglichen,
**dadurch gekennzeichnet,**
**dass** der Arbeitsschritt des Bildens der Schweißverbindungs-Oberfläche (8) dergestalt ausgeführt wird, dass die genannte Oberfläche mindestens zwei aneinander stoßende ebene Abschnitte (8a, 8b, 8c, 108a, 108b) aufweist, die aufeinander folgend entlang der Kontaktrippen-Sehne (6) angeordnet sind.

2. Herstellungs- oder Reparaturverfahren nach Anspruch 1,
**dadurch gekennzeichnet,**
**dass** der Arbeitsschritt des Bildens der Schweißverbindungs-Oberfläche (8) dergestalt ausgeführt wird, dass diese ausschließlich aus zwei aneinander stoßenden ebenen Abschnitten (108a, 108b) besteht.

3. Herstellungs- oder Reparaturverfahren nach Anspruch 1,
**dadurch gekennzeichnet,**
**dass** der Arbeitsschritt des Bildens der Schweißverbindungs-Oberfläche (8) dergestalt ausgeführt wird, dass diese ausschließlich aus drei aneinander stoßenden ebenen Abschnitten (8a, 8b, 8c) besteht.

4. Herstellungs- oder Reparaturverfahren nach einem der vorherigen Ansprüche,
**dadurch gekennzeichnet,**
**dass** der Arbeitsschritt des Bildens der Schweißverbindungs-Oberfläche (8) dergestalt ausgeführt wird, dass jede Grenzlinie (16a, 16b, 116a) zwischen zwei aneinander stoßenden ebenen Abschnitten (8a, 8b, 8c, 108a, 108b) parallel zu einer Schwingrichtung (18) verläuft, die für die Ausführung des Arbeitsschritts des Einbaus des Schaufelblatts (2) durch lineares Reibschweißen eingehalten wird.

5. Herstellungs- oder Reparaturverfahren nach Anspruch 4,
**dadurch gekennzeichnet,**
**dass** die Schwingrichtung (18), die für die Ausführung des Arbeitsschritts des Einbaus des Schaufelblatts (2) durch lineares Reibschweißen eingehalten wird, ausgewählt wird aus einer tangentialen Richtung (20) zur Scheibe (1) und allen im Wesentlichen senkrecht zur Kontaktrippen-Sehne (6) liegenden Richtungen (22).

6. Herstellungsverfahren nach einem der vorherigen Ansprüche,
**dadurch gekennzeichnet,**
**dass** es ferner einen Arbeitsschritt des Bildens einer komplementären Schweißverbindungs-Oberfläche (24) an einem Schaufelblatt (2) umfasst, die geeignet ist, auf die Schweißverbindungs-Oberfläche (8) der Kontaktrippe (4) der Scheibe (1) zu passen.

7. Scheibe (1) für eine einstückige beschaufelte Scheibe, die mindestens eine hervorstehende Kontaktrippe (4) aufweist, die sich von einem stromaufwärtigen Ende (4a) zu einem stromabwärtigen Ende (4b) entlang einer Kontaktrippen-Sehne (6) erstreckt, und an der eine Schweißverbindungs-Oberfläche (8) vorgesehen wird, die dazu bestimmt ist, einen Einbau durch lineares Reibschweißen eines Schaufelblatts (2) auf dieser Kontaktrippe (4) der Scheibe (1) zu ermöglichen,
**dadurch gekennzeichnet,**
**dass** die Schweißverbindungs-Oberfläche (8) bei mindestens einer Kontaktrippe (4) mindestens zwei aneinander stoßende ebene Abschnitte (8a, 8b, 8c, 108a, 108b) aufweist, die aufeinander folgend entlang der Kontaktrippen-Sehne (6) angeordnet sind.

8. Scheibe (1) für eine einstückige beschaufelte Scheibe nach Anspruch 7,
**dadurch gekennzeichnet,**
**dass** die Schweißverbindungs-Oberfläche (8) bei mindestens einer Kontaktrippe (4) ausschließlich aus zwei aneinander stoßenden ebenen Abschnitten (108a, 108b) besteht.

9. Scheibe (1) für eine einstückige beschaufelte Scheibe nach Anspruch 7,
**dadurch gekennzeichnet,**
**dass** die Schweißverbindungs-Oberfläche (8) bei mindestens einer Kontaktrippe (4) ausschließlich aus drei aneinander stoßenden ebenen Abschnitten (8a, 8b, 8c) besteht.

10. Scheibe (1) für eine einstückige beschaufelte Scheibe nach einem der Ansprüche 7 bis 9,
**dadurch gekennzeichnet,**
**dass** jede Grenzlinie (16a, 16b, 116a) zwischen zwei aneinander stoßenden ebenen Abschnitten (8a, 8b, 8c, 108a, 108b) der Schweißverbindungs-Oberfläche (8) bei mindestens einer Kontaktrippe (4) parallel zu einer Richtung verläuft, die aus einer tangentialen Richtung (20) zur Scheibe (1) und allen im Wesentlichen senkrecht zur Kontaktrippen-Sehne (6) liegenden Richtungen (22) ausgewählt wird.

## Claims

1. Process for manufacturing or repairing a monobloc bladed disc including a stage of forming, on a protruding projection (4) belonging to a disc (1) and extending from an upstream end (4a) to a downstream end (4b) along a protruding projection chord (6), a welded joint surface (8) intended to allow a subsequent stage of fitting a blade (2) by linear friction welding onto said protruding projection (4) of the disc (1), **characterized in that** the stage of forming the welded joint surface is carried out in such a way that said surface includes at least two butt-jointed plane portions (8a,8b,8c,108a,108b), arranged one after the other along the protruding projection chord (6).

2. Manufacturing or repair process according to claim 1, **characterised in that** the stage of forming the welded joint surface (8) is carried out in such a way that it consists exclusively of two butt-jointed plane portions (108a,108b).

3. Manufacturing or repair process according to claim 1, **characterised in that** the stage of forming the welded joint surface (8) is carried out in such a way that it consists exclusively of three butt-jointed plane portions (8a,8b,8c).

4. Manufacturing or repair process according to any one of the previous claims, **characterised in that** the stage of forming the welded joint surface (8) is carried out in such a way that each intersection (16a,16b,116a) between two butt-jointed plane portions (8a,8b,8c,108a,108b) is parallel to a direction of oscillation (18) adopted for implementing the stage of fitting the blade (2) by linear friction welding.

5. Manufacturing or repair process according to claim 4, **characterised in that** the direction of oscillation (18) adopted for implementing the stage of fitting the blade (2) by linear friction welding is selected from among the group consisting of a tangential direction (20) of the disc (1), and of all directions (22) substantially perpendicular to the protruding projection chord (6).

6. Manufacturing or repair process according to any one of the previous claims, **characterised in that** it additionally includes a stage of forming, on a blade (2), a complementary welded joint surface (24), susceptible of conforming in shape to the welded joint surface (8) of the protruding projection (4) of the disc (1).

7. Disc (1) for a monobloc bladed disc comprising at least one protruding projection (4) extending from an upstream end (4a) to a downstream end (4b) along a protruding projection chord (6), and on which a welded joint surface (8) is provided that is intended to allow a blade (2) to be fitted by linear friction welding onto the protruding projection (4) of the disc (1), **characterised in that** for at least one protruding projection (4), the welded joint surface (8) includes at least two butt-jointed plane portions (8a,8b,8c,108a,108b), arranged one after the other along the protruding projection chord (6).

8. Disc (1) for a monobloc bladed disc according to claim 7, **characterised in that** for at least one protruding projection (4), the welded joint surface (8) consists exclusively of two butt-jointed plane portions (108a,108b).

9. Disc (1) for a monobloc bladed disc according to claim 7, **characterised in that** for at least one protruding projection (4), the welded joint surface (8) consists exclusively of three butt-jointed plane portions (8a,8b,8c).

10. Disc (1) for a monobloc bladed disc according to any one of claims 7 to 9, **characterised in that** for at least one protruding projection (4), each intersection (16a,16b,116) between two butt-jointed plane portions (8a,8b,8c,108a,108b) of the welded joint surface (8) is parallel to a direction selected from among the group consisting of one tangential direction (20) of the disc (1), and of all directions (22) that are substantially perpendicular to the protruding projection chord (6).
